# EUROPÄISCHE PATENTSCHRIFT

(11) **EP 3 159 205 B1**
(45) Veröffentlichungstag und Bekanntmachung des Hinweises auf die Patenterteilung: **04.09.2019**
(21) Anmeldenummer: 16192742.1
(22) Anmeldetag: 07.10.2016
(51) Int. Cl.: B60M 1/30

(54) **DEHNVERBINDER FÜR STROMSCHIENEN**
EXPANSION JOINT FOR CONDUCTOR RAILS
CONNECTEUR EXTENSIBLE POUR RAILS CONDUCTEURS

(30) Priorität: 20.10.2015 DE 202015105562 U
(43) Veröffentlichungstag der Anmeldung: 26.04.2017
(73) Patentinhaber: REHAU AG + Co, 95111 Rehau (DE)
(72) Erfinder: Meinel, Udo, 95111 Rehau (DE); Deistler, Thomas, 95158 Kirchenlamitz (DE)

(56) Entgegenhaltungen:
- CN-A- 103 318 054
- CN-U- 203 254 980
- CN-Y- 2 925 957
- DE-A1- 3 013 111
- DE-A1- 3 306 117
- DE-A1- 10 150 694
- DE-U- 7 029 010
- US-A1- 2012 111 957

## Beschreibung

Die Erfindung betrifft einen Dehnverbinder für Stromschienensysteme elektrisch betriebener Bahnen, insbesondere S-Bahnen, U-Bahnen und dergleichen, umfassend wenigstens zwei, einander gegenüberliegend über wenigstens eine Fuge voneinander beabstandet, angeordnete Stromschienen, wenigstens zwei Laschen, wenigstens ein Verbindungselement sowie Befestigungselemente und ein solches Stromschienensystem.

Ein derartiger, gattungsgemäßer Dehnverbinder ist bspw. offenbart in der DE 2239198 A. Dieser Dehnverbinder mit mehreren parallelen wellenförmig angeordneten Kupferseilen, die ein- oder zweischichtig angeordnet sind, als Stromverbindung, deren Enden mithilfe von Kabelschuhen mit den Stromschienen elektrisch verbunden sind, zeichnet sich dadurch aus, dass auf die beiden Stromschienenenden ein jeweils bis zum Kabelschuh reichendes H-förmiges Profilstück aufgesetzt ist, wobei die beiden unteren Schenkel an den beiden Seiten der Stromschienen und das Querstück auf dem Schienenfuß satt anliegt und das Profilstück auf einem Stromschienenende angeschweißt ist, das die Kupferseile im oberen Teil des H-förmigen Profilstücks eingelegt und mit einer Abdeckung versehen sind und das an den Innenseiten der unteren Schenkel des H-förmigen Profilstücks Führungsleisten fest angebracht sind, die in Längsrillen der Stromschienen eingreifen. Der Dehnverbinder weist weiterhin eine als U-förmiges Blechstück ausgebildete Abdeckung auf, welche in die oberen Schenkel des H-förmigen Profilstücks eingeschoben und mit diesem verschweißt ist.

Ein weiterer gattungsgemäßer Dehnverbinder ist in der DE 2427524 A beschrieben.

Der Dehnverbinder für T-förmige Stromschienen mit an beiden Seiten des Steges angeordneten Verbindungslaschen und elektrischen Verbindungsseilen soll sich dadurch auszeichnen, dass die Verbindungslaschen winkelförmig ausgebildet und derart angeordnet sind, dass der eine Schenkel der Verbindungslaschen am Steg der Stromschiene anliegt und der andere Schenkel mit einer Nut die Flanken des Schienenfußes umgreift, wobei in dem durch die winkelförmigen Verbindungslaschen gebildeten Hohlraum die elektrischen Verbindungsseile angeordnet sind.

in Längsrichtung nicht beeinträchtigt. Zur Herstellung einer elektrisch gut leitenden Verbindung zwischen den Stromschienenenden dient ein Stromschienenverbinder aus flexibler Litze.

Die CN 2925957 Y offenbart einen Dehnverbinder für Stromschienensysteme elektrisch betriebener Bahnen umfassend zwei einander gegenüberliegend über eine Fuge voneinander beabstandet angeordnete Stromschienen, wenigstens zwei Laschen, Verbindungselemente sowie Befestigungselemente.

Die CN 103318054 A offenbart einen Dehnverbinder für Stromschienensysteme elektrisch betriebener Bahnen umfassend wenigstens zwei, einander gegenüberliegend über wenigstens eine Fuge voneinander beabstandet angeordnete Stromschienen, Laschen, wobei die Laschen an ihren beiden Enden jeweils eine schlitzförmige Öffnung aufweisen, ein Verbindungselement sowie verschiedene Befestigungselemente.

Die CN 203254980 U offenbart einen Dehnverbinder für Stromschienensysteme elektrisch betriebener Bahnen umfassend wenigstens zwei, einander gegenüberliegend über wenigstens eine Fuge voneinander beabstandet angeordnete Stromschienen, wenigstens zwei Laschen, Verbindungselemente, die aneinander gegenüberliegend angeordneten Übertragungselementen fixiert sind. Die Laschen weisen keine schlitzförmigen Öffnungen auf, während die Stromschienen schlitzförmige Öffnungen aufweisen.

Die DE 3013111 A1 offenbart einen Dehnverbinder für zwei aufeinanderfolgende Stromschienen die längs ihrer Schleiffläche von einem Stromabnehmerschleifstück beschleifbar sind, dessen Breite höchstens der Breite der Schleiffläche entspricht, wobei die einander zugewandten Endbereiche der beiden Stromschienen durch einen mit Abstand von der Schleifflächenebene vorgesehene Längsstabanordnung überbrückt sind, deren Endteile im zugeordneten Endbereich der Stromschiene längsverschiebbar geführt sind, wobei die Längsstabanordnung zwischen ihren beiden Endteilen mit wenigstens einem Schleifflächenzwischenstück versehen ist und beide Endteile im zugeordneten Endbereich um ein beschränktes Längsmaß verschiebbar geführt sind, welches bei vorgezogenem Endteil höchst den freien Abstand zwischen Stromschienenende und benachbartem Schleifflächenzwischenstück entspricht. Weiterhin ist die Längsstabanordnung aus zwei, jeweils eines der beiden Endteile aufweisenden Stäben aufgebaut, an deren einander zugewandten Enden die Schleifflächenzwischenstücke angeordnet sind. Die Längsverschiebbarkeit der Endteile bzw. der Schleifflächenzwischenstücke ist mit Hilfe von Langlochausnehmungen und diese durchgreifenden Querelementen begrenzt.

Die US 2012/0111957 A1 offenbart einen Dehnverbinder für Stromschienen elektrisch betriebener Bahnen umfassend wenigstens zwei aneinander gegenüberliegend über eine Fuge voneinander beabstandet angeordnete Stromschienen sowie wenigstens zwei Laschen. Weiterhin offenbart werden Verbindungselemente, die zwei einander gegenüberliegend angeordnete Befestigungselemente elektrisch leitend verbinden.

Die DE 7029010 U offenbart eine Vorrichtung zum Verbinden der Enden zweier Stromschienen zwischen denen sich zum Ausgleich von durch Temperaturschwankungen bedingten Längenänderungen eine Lücke befindet, die durch einen sich außerhalb des Stromschienenverlaufs erstreckenden flexiblen Stromschienenverbinder überbrückt ist, wobei die Stromschienenenden durch zwei in Richtung des Stromschienenverlaufs angeordnete Laschen aus elektrisch leitendem Material verbunden sind, die jeweils an einer Seite des Stromschienensteges anliegen und die an mindestens einem Stromschienenende einen Längsschlitz aufweisen und in diesem gegenüber dem zugeordneten Stromschienenende geführt sind. Die Laschen sind am Stromschienenende mit zwei Schrauben befestigt, die den Steg des Stromschienenendes durchsetzen und haben an ihrer am Stromschienenende anliegenden Seite jeweils einen Längsschlitz. Durch diese und durch den Steg des Stromschienenendes ist eine Halteschraube geführt, die die Beweglichkeit dieser Teile integrierbar ist, der eine hohe Variabilität und eine kleine Baugröße aufweist; sowie ein Stromschienensystem mit einem derartigen Dehnverbinder.

Erfindungsgemäß wird diese Aufgabe durch die Merkmale des Anspruches 1 und des Anspruches 13 gelöst. Weitere vorteilhafte Ausgestaltungen sind in den Unteransprüchen beschrieben.

Es hat sich überraschend herausgestellt, dass ein Dehnverbinder für Stromschienensysteme elektrisch betriebener Bahnen, insbesondere S-Bahnen, U-Bahnen und dergleichen, umfassend wenigstens zwei, einander gegenüberliegend über wenigstens eine Fuge voneinander beabstandet, angeordneten Stromschienen, wenigstens zwei Laschen, wenigstens ein Verbindungselement, sowie Befestigungselemente sich erfindungsgemäß dadurch auszeichnet, dass die Lasche an wenigstens einem freien Ende wenigstens eine schlitzförmige Öffnung aufweist, wobei die Stromschiene über wenigstens ein Befestigungselement gleitend mit diesem freien Ende der Lasche verbunden ist und wobei die Laschen über wenigstens ein, elektrisch leitfähiges, Verbindungselement miteinander verbunden sind.

Der erfindungsgemäße Dehnverbinder für Stromschienensysteme elektrisch betriebener Bahnen zeichnet sich einerseits dadurch aus, dass er innerhalb der üblicherweise verwendeten Standardabdeckungen problemlos in alle neuen bzw. auch in bestehende Stromschienensysteme integrierbar ist, während andererseits durch die Verwendung der optimierten Querschnitte zur Stromleitung in Kombination mit den flexiblen, niederohmigen Verbindungselementen trotz der geringen Baugröße überraschenderweise sehr geringe elektrische Widerstandswerte von weniger als 10 µΩ im Bereich der Laschen erzielbar sind.

Der erfindungsgemäße Dehnverbinder für Stromschienensysteme elektrisch betriebener Bahnen zeichnet sich weiterhin dadurch aus, dass er eine innovative Befestigung der Laschen an den Stromschienen aufweist, wobei jeweils ein freies Ende der Lasche mit einem Ende der Stromschiene starr fixiert ist, während das andere, gegenüberliegend angeordnete, freie Ende der Lasche mit dem Ende der anderen Stromschiene gleitend verbunden ist. Der erfindungsgemäße Dehnverbinder ist weiter so ausgebildet, dass wenigstens eine schlitzförmige Öffnung in wenigstens einer Lasche angeordnet ist, deren Länge die maximal durch den erfindungsgemäßen Dehnverbinders zu kompensierende Längenänderung im Stromschienensystem definiert.

Ein weiterer Vorteil des erfindungsgemäßen Dehnverbinders besteht darin, dass die einander gegenüberliegend angeordneten freien Enden der Laschen zueinander versetzt angeordnet sind. Durch diese Positionierung weist der erfindungsgemäße Dehnverbinder bei bestimmungsgemäßem Einsatz eine sehr geringe Baugröße auf und ist so in alle bestehenden Stromschienensystem neu einbaubar bzw. in bestehende Stromschienensysteme als Ersatz montierbar.

Weiterhin vorteilhaft bei dem erfindungsgemäßen Dehnverbinder ist, dass die schlitzförmige Öffnung in dem, dem starr fixierten freien Ende gegenüberliegend angeordneten, freien Ende der Lasche angeordnet ist. Hierdurch kann einerseits wiederum die Baugröße des erfindungsgemäßen Dehnverbinders erheblich gering gehalten werden, während durch die Position bzw. Dimensionierung der schlitzförmigen Öffnung die durch den erfindungsgemäßen Dehnverbinder zu kompensierende Längenänderung anpassbar bzw. definierbar ist. Der erfindungsgemäße Dehnverbinder ist weiterhin so ausgebildet, dass wenigstens eine Lasche im Bereich der schlitzförmigen Öffnung wenigstens ein Geleitselement aufweist. Durch den Einsatz des Geleitselementes ist eine optimiertere Bewegung der einander gegenüberliegend angeordneten Stromschienen möglich. Weitere Vorteile bestehen darin, dass einerseits ein möglicher Verschleiß am freien Ende der Lasche selbst verhindert oder zumindest sehr stark reduziert ist und andererseits bei einem möglichen Verschleiß jeweils nur das entsprechende Gleitelement zu wechseln ist.

Ein weiterer Vorteil des erfindungsgemäßen Dehnverbinders besteht darin, dass die Länge der schlitzförmigen Öffnung etwa der Breite der Fuge zwischen den gegenüberliegenden Stromschienen entspricht. Hierdurch ist der erfindungsgemäße Dehnverbinder einerseits sehr kostengünstig und wirtschaftlich herstellbar und den jeweiligen Anforderungen an verschiedenster Stromschienensysteme einfach anpassbar.

Beim erfindungsgemäßen Dehnverbinder weisen die Laschen wenigstens eine Basis sowie wenigstens einen davon wegragenden Steg auf. Durch diesen Querschnitt bzw. diese Geometrie sind die Laschen des erfindungsgemäßen Dehnverbinders kostengünstig und wirtschaftlich durch einfache Fertigungsschritte wie Sägen, Bohren und Fräsen herstellbar, ohne das zeit- und materialaufwendige Fügeverfahren erforderlich sind.

In der erfindungsgemäßen Ausgestaltung des Dehnverbinders überragt der Steg der Lasche die Stromschiene wenigstens teilweise. Hierdurch entstehen zwei einander gegenüberliegend angeordnete Flächen, die bei bestimmungsgemäßer Verwendung des erfindungsgemäßen Dehnverbinders zueinander relativ bewegbar sind und so eine kleine Baugröße des erfindungsgemäßen Dehnverbinders begründen.

Ein weiterer Vorteil des erfindungsgemäßen Dehnverbinders besteht darin, dass der Steg der Lasche den Profilfuß der Stromschiene wenigstens teilweise überragt.

Der erfindungsgemäße Dehnverbinder zeichnet sich weiterhin dadurch aus, dass die Stege der Laschen über wenigstens ein zwischen ihnen angeordnetes Verbindungselement elektrisch leitend verbunden sind. In dieser erfindungsgemäßen Ausgestaltung des Dehnverbinders ist es erstmals möglich, dass über die flexibel ausgebildeten Verbindungselemente der Strom ausgehend von einer Stromschiene über das fest mit dieser verbundene freie Ende der Lasche fließt, von dort über die elektrisch leitfähigen, flexiblen Verbindungselemente in die gegenüberliegend angeordnete Lasche weiterfließt und von dieser Lasche wiederum über das starr mit der Stromschiene verbundene freie Ende der Lasche in die gegenüberliegend angeordnete Stromschiene weiterfließt.

Ebenfalls vorteilhaft beim erfindungsgemäßen Dehnverbinder ist, dass das Verbindungselement als flexibles, niederohmiges Band aus einem metallischen Material gebildet ist mit einem elektrischen Widerstand von etwa 100 µΩ / m, mit dem völlig überraschend sehr geringe Werte des elektrischen Widerstandes für den erfindungsgemäßen Dehnverbinder realisierbar sind.

Weiterhin vorteilhaft beim erfindungsgemäßen Dehnverbinder ist, dass das Verbindungselement über wenigstens ein an seinen freien Enden angeordnetes Kontaktelement mit wenigstens einer Lasche verbunden ist. Hierdurch ist der erfindungsgemäße Dehnverbinder einerseits sehr wirtschaftlich herstellbar sowie kostengünstig montierbar, wobei andererseits überraschenderweise eine hohe Stromtragfähigkeit realisierbar ist.

Ebenfalls vorteilhaft bei dem erfindungsgemäßen Dehnverbinder ist, dass das Verbindungselement über wenigstens ein an seinen freien Enden angeordnetes Kontaktelement mit wenigstens einem Steg der Lasche verbunden ist. Hierdurch ist einerseits der erfindungsgemäße Dehnverbinder kostengünstig herstellbar, sowie einfach montierbar und anderseits sind die überraschenderweise ermittelten geringen Werte des elektrischen Widerstandes realisierbar.

Es hat sich weiterhin als vorteilhaft herausgestellt bei dem erfindungsgemäßen Dehnverbinder, dass die Verbindungselemente über wenigstens ein Abdeckelement von der Stromschiene beabstandet angeordnet sind. Vorteilhafterweise kann dabei das Abdeckelement aus einem elektrisch leitfähigen Werkstoff wie beispielsweise Stahl, Edelstahl und dergleichen ausgebildet sein, welches vorteilhafterweise bei der Verwendung unterschiedlich leitfähiger Werkstoffe für die Stromschiene und die Verbindungselemente zu einer Reduzierung des Abstandes der jeweiligen Werkstoffe in der elektrochemischen Spannungsreihe führt.

Der erfindungsgemäße Dehnverbinder ist aber auch so ausgebildet, dass das Abdeckelement wenigstens teilweise aus einem nicht elektrisch leitfähigen Material wie bspw. polymere, duromere bzw. keramische Werkstoffe hergestellt ist, was zu einer elektrischen Isolierung zwischen der Stromschiene und den Verbindungselementen führt, welche vorteilhafterweise auch zu einer Trennung der unterschiedlichen, elektrisch leitfähigen Werkstoffe der Stromschiene sowie der Verbindungselemente führt.

Es liegt jedoch auch im Rahmen der Erfindung, dass der erfindungsgemäße Dehnverbinder so ausgebildet ist, dass die Verbindungselemente über wenigstens ein Abdeckelement vom Profilfuß der Stromschiene beabstandet angeordnet sind. Das beim erfindungsgemäßen Dehnverbinder eingesetzte Abdeckelement realisiert eine elektrische Trennung zwischen der Stromschiene und dem die Laschen elektrisch verbindenden Verbindungselement.

Die Stromschiene ist im Allgemeinen aus dem Werkstoff Aluminium hergestellt, während das Verbindungselement, welches beispielsweise aus Kupfer hergestellt ist, bei einem direkten Kontakt zur Stromschiene zu einer unvorteilhaften elektrolytischen Reaktion führen könnte, welche die Lebensdauer eines solchen Dehnverbinders ungünstig beeinflusst.

Der erfindungsgemäße Dehnverbinder ist weiterhin so ausgebildet, dass wenigstens eine Lasche über wenigstens ein Distanzelement von der Stromschiene beabstandet angeordnet ist. Vorteilhafterweise ist der erfindungsgemäße Dehnverbinder so ausgebildet, dass das Distanzelement, welches an dem starr mit der Stromschiene fixierten freien Ende der Lasche angeordnet ist, aus einem elektrisch leitfähigen Werkstoff besteht und so die Stromübertragung ermöglicht, während das Distanzelement, welches an dem, der Stromschiene gleitend angeordneten, freien Ende der Lasche angeordnet ist aus einem nicht elektrisch leitfähigen Werkstoff hergestellt ist. Vorteilhafterweise kann ein derartiges Distanzelement aus einem nicht elektrisch leitfähigen Werkstoff an diesem freien Ende der Lasche zum einen die gleitenden Bewegungen des erfindungsgemäßen Dehnverbinders positiv unterstützen und andererseits ein unbeabsichtigtes Verschweißen des freien Endes einer Lasche mit der Stromschiene durch ungünstig verlaufende Teilströme verhindern.

Dabei hat sich weiterhin herausgestellt, dass die Dicke des nicht elektrisch leitfähigen (isolierenden) Distanzelementes kleiner oder gleich der Dicke des elektrisch leitfähigen Distanzelementes ist.

Es liegt jedoch auch im Rahmen der Erfindung, dass wenigstens eine Lasche über wenigstens ein Distanzelement vom Profilkopf und/oder vom Profilfuß und/oder vom Profilsteg der Stromschiene beabstandet angeordnet ist.

Vorteilhafterweise ist der erfindungsgemäße Dehnverbinder weiterhin so ausgebildet, dass die Stromschiene und / oder die Lasche aus Metall, bevorzugt aus Aluminium mit einer elektrischen Leitfähigkeit von wenigstens 30 x 10⁶ S/m hergestellt ist. Hierdurch sind die mit dem erfindungsgemäßen Dehnverbinder erstmals realisierbaren geringen Werte des elektrischen Widerstandes von etwa 10 µΩ erst möglich.

Vorteilhaft beim erfindungsgemäßen Dehnverbinder ist weiterhin, dass das Verbindungselement und / oder das Kontaktelement aus Metall, bevorzugt aus Kupfer mit einer elektrischen Leitfähigkeit von wenigstens 58 x 10⁶ S/m hergestellt ist und somit ebenfalls für die geringen Werte des elektrischen Widerstandes des erfindungsgemäßen Dehnverbinders sorgen.

Dabei hat es sich weiterhin als vorteilhaft herausgestellt, dass das Verbindungselement auch aus Aluminium bzw. Silber mit einer ähnlichen elektrischen Leitfähigkeit herstellbar ist. Weiterhin weist das Verbindungselement vorteilhafterweise im Querschnitt eine Fläche im Bereich von etwa 100 bis 400 mm², vorteilhafterweise 150 bis 300 mm² auf.

Das Verbindungselement ist vorteilhafterweise weiterhin so ausgebildet, dass es einen elektrischen Widerstand von maximal 100 µΩ / m aufweist.

Beim erfindungsgemäßen Dehnverbinder weisen weiterhin die Verbindungselemente zwischen den an ihren freien Enden angeordneten Kontaktelementen eine Länge von etwa 100 bis 500 mm, bevorzugt 150 bis 400 mm, besonders bevorzugt 250 bis 350 mm auf. Durch die Dimensionierung der Verbindungselemente sind somit verschiedene Dehnverbinder mit unterschiedlich breit dimensionierten Fugen zwischen den Stromschienen herstellbar.

Dabei hat es sich weiterhin als vorteilhaft bei dem erfindungsgemäßen Dehnverbinder herausgestellt, dass das Verbindungselement im Querschnitt etwa prismatisch, rund, oval und dergleichen ausgebildet ist. Hierdurch ist einerseits eine wirtschaftliche und kostengünstige Herstellung des erfindungsgemäßen Dehnverbinders sowie des Verbindungselementes möglich, während gleichzeitig die elektrische Leitfähigkeit über eine optimale Mindestquerschnittsfläche des Verbindungselementes von wenigstens 100 mm², bevorzugt 200 mm² durch diese verschiedenen Querschnitte optimiert realisierbar ist.

Der erfindungsgemäße Dehnverbinder ist weiter so ausgebildet, dass die Stromschiene einen Profilfuß, einen Profilkopf sowie einen diese verbindenden Profilsteg aufweist. Weiterhin ist der erfindungsgemäße Dehnverbinder so ausgebildet, dass die Stromschiene wenigstens ein, am Profilkopf angeordnetes Gleitflächenprofil aufweist. Durch diese optimale geometrische Ausgestaltung des erfindungsgemäßen Dehnverbinders ist dieser sowohl bei Neubau von Stromschienensystemen als auch bei Reparatur bzw. Ersatz bestehender Stromschienensysteme für elektrisch betriebene Bahnen schnell und problemlos montierbar.

Dabei hat es sich ebenfalls als vorteilhaft bei dem erfindungsgemäßen Dehnverbinder herausgestellt, dass das Gleitflächenprofil und / oder die Befestigungselemente und / oder das Abdeckelement aus Metall, bevorzugt aus Stahl gemäß DIN EN 10020, besonders bevorzugt aus Edelstahl gemäß DIN EN 10088 hergestellt ist.

Der erfindungsgemäße Dehnverbinder ist ebenfalls so ausgebildet, dass das an den freien Enden der Verbindungselemente angeordnete Kontaktelement über wenigstens ein Befestigungselement an der Lasche fixiert ist. Hierdurch ist eine einfache mechanische Verbindung möglich, sowie eine dadurch bedingte kostengünstige Montage des erfindungsgemäßen Dehnverbinders realisierbar.

Der erfindungsgemäße Dehnverbinder ist weiterhin so ausgebildet, dass das an den freien Enden der Verbindungselemente angeordnete Kontaktelement über wenigstens ein Befestigungselement am Steg der Lasche fixiert ist. Durch diese einfache mechanische Verbindung sowie die dadurch bedingte kostengünstigen Montage ist jederzeit die gewünschte elektrische Leitfähigkeit des erfindungsgemäßen Dehnverbinders realisiert.

Weiterhin vorteilhaft ist der erfindungsgemäße Dehnverbinder so ausgebildet, dass der Abstand der am Steg der Lasche befestigten Verbindungselemente etwa der Breite der Fuge der voneinander beabstandet angeordneten Stromschienen entspricht. Dies führt zu einer wirtschaftlichen und kostengünstigen Herstellung des erfindungsgemäßen Dehnverbinders. Es hat sich ebenfalls als vorteilhaft herausgestellt, dass der Abstand der an den Laschen angeordneten Verbindungselemente etwa der Länge der schlitzförmigen Öffnung entspricht. Dies führt vorteilhafterweise zu einer kompakten Bauweise sowie zu einer wirtschaftlichen und kostengünstigen Herstellung.

Ebenfalls vorteilhaft beim erfindungsgemäßen Dehnverbinder ist, dass das Befestigungselement am freien Ende der Lasche fixiert ist, was zu einer einfachen und kostengünstigen Montage des erfindungsgemäßen Dehnverbinders führt.

Weiterhin vorteilhaft hat sich bei dem erfindungsgemäßen Dehnverbinder herausgestellt, dass die Basis der Lasche im Querschnitt etwa prismatisch, T-förmig, doppel-T-förmig, C-förmig und dergleichen ausgebildet ist, was insbesondere zu reduzierten Herstellungskosten führt.

Es hat sich bei weiterhin als vorteilhaft bei dem erfindungsgemäßen Dehnverbinder herausgestellt, dass der Steg einstückig mit der Basis der Lasche verbunden ist. Dies führt zu einer besonders guten Übertragung des elektrischen Stromes.

Es liegt jedoch auch im Rahmen der Erfindung, dass der Steg kraftschlüssig und / oder formschlüssig mit der Lasche verbunden ist. Hierdurch ist vorteilhafterweise die Lasche teilweise bzw. komplett bei defekten Dehnverbindern ersetzbar und trotzdem ist die elektrische Leitfähigkeit bzw. sind die hohen Leitwerte des erfindungsgemäßen Dehnverbinders nicht beeinträchtigt.

In einer ebenfalls vorteilhaften Ausgestaltung des erfindungsgemäßen Dehnverbinders ist das Verbindungselement an der dem Profilfuß der Stromschiene gegenüberliegend angeordneten Innenseite des Steges der Lasche fixiert. Hierdurch ist neben der schnellen und wirtschaftlichen Montage auch eine sehr kleine Baugröße des erfindungsgemäßen Dehnverbinders realisierbar.

Es liegt jedoch auch im Rahmen der Erfindung, dass das Verbindungselement an der dem Profilfuß der Stromschiene gegenüberliegend angeordneten Außenseite des Steges der Lasche fixiert ist.

Der erfindungsgemäße Dehnverbinder zeichnet sich außerdem dadurch aus, dass die schlitzförmige Öffnung der Lasche eine Länge von etwa 50 bis 400 mm, bevorzugt 75 bis 300 mm, besonders bevorzugt 100 bis 200 mm aufweist. Hierdurch können erfindungsgemäße Dehnverbinder zur Verfügung gestellt werden, die einerseits kostengünstig und wirtschaftlich herstellbar sind und die andererseits den jeweils zu kompensierenden Längenänderungen von Stromschienensystemen elektrisch betriebener Bahnen in verschiedensten Dimensionen anpassbar sind.

Der erfindungsgemäße Dehnverbinder zeichnet sich auch dadurch aus, dass durch die variable Anzahl und/oder die variable Geometrie / der Querschnitt des Verbindungselementes alle elektrischen bzw. mechanischen Anforderungen von bestehenden sowie von neuen Stromschienensystemen elektrisch betriebener Bahnen einfach und kostengünstig realisierbar sind.

Die Erfindung betrifft weiter ein Stromschienensystem elektrisch betriebener Bahnen, insbesondere S-Bahnen, U-Bahnen und dergleichen, mit einem Dehnverbinder gemäß den vorherigen Ausführungen.

Die Erfindung soll nun diesen nicht einschränkenden Ausführungsbeispielen näher beschrieben werden.

Es zeigen:
- Fig. 1:: perspektivische Darstellung eines erfindungsgemäßen Dehnverbinders;
- Fig. 2:: weitere perspektivische Darstellung eines erfindungsgemäßen Dehnverbinders;
- Fig. 3:: Vorderansicht eines erfindungsgemäßen Dehnverbinders;
- Fig. 4:: perspektivische Darstellung eines weiteren erfindungsgemäßen Dehnverbinders.

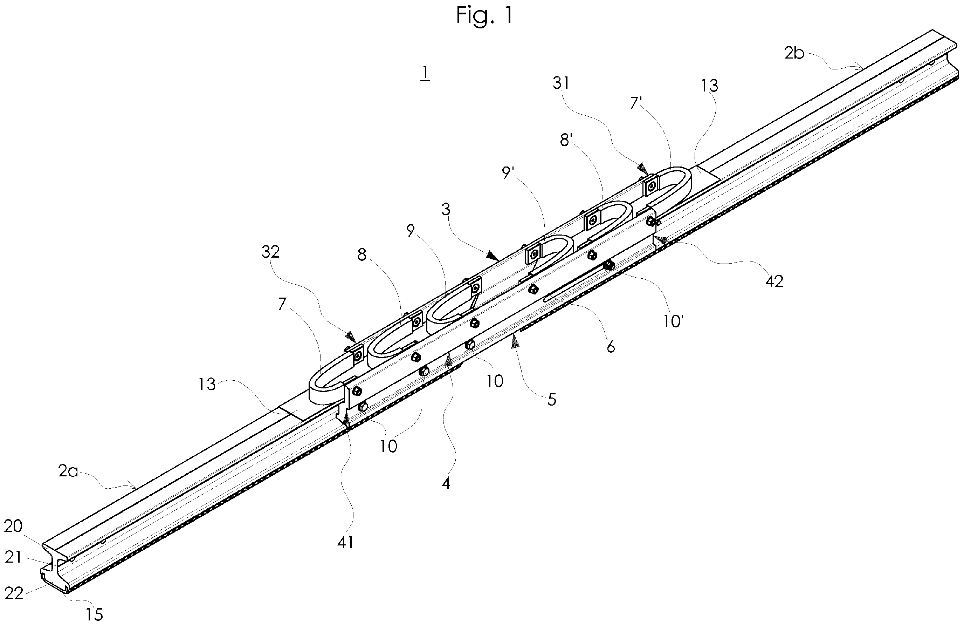

In der Fig. 1 ist eine perspektivische Darstellung eines erfindungsgemäßen Dehnverbinders 1 dargestellt.

Der Dehnverbinder 1 umfasst in diesem Ausführungsbeispiel zwei, einander gegenüberliegend über eine Fuge 5 voneinander beabstandet, angeordnete Stromschienen 2a, 2b, zwei Laschen 3, 4, Verbindungselemente 7, 8, 9, 7', 8', 9' sowie Befestigungselemente 10, 10'. Die Stromschienen 2a, 2b sind über die Laschen 3, 4 miteinander verbunden.

Dabei weist in diesem Ausführungsbeispiel die Lasche 4 an einem freien Ende 42 eine schlitzförmige Öffnung 6 auf, an der ein Befestigungselement 10' angeordnet ist. Über das Befestigungselement 10' ist das freie Ende 42 der Lasche 4 mit der Stromschiene 2b gleitend verbunden.

Das diesem freien Ende 42 gegenüberliegend angeordnete, freie Ende 41 der Lasche 4 ist starr an der Stromschiene 2a fixiert.

Gegenüberliegend zur Lasche 4 ist eine Lasche 3 angeordnet, welche an ihrem freien Ende 32 eine hier nicht sichtbare schlitzförmige Öffnung aufweist, während das gegenüberliegende freie Ende 31 der Lasche 3 mit der Stromschiene 2b fest fixiert ist.

Die Stromschiene 2a, 2b ist so ausgebildet, dass sie einen Profilfuß 20, einen Profilkopf 22 sowie einen diese verbindenden Profilsteg 21 aufweist.

Die Stromschiene 2a, 2b ist weiterhin so ausgebildet, dass sie wenigstens ein, am Profilkopf 22 angeordnetes, Gleitflächenprofil 15 aufweist.

Der erfindungsgemäße Dehnverbinder 1 ist weiter so ausgebildet, dass die Laschen 3, 4 über wenigstens ein, elektrisch leitfähiges, Verbindungselement 7, 8, 9, 7', 8', 9' miteinander verbunden sind.

Die Verbindungselemente 7, 8, 9, 7', 8', 9' sind in diesem Ausführungsbeispiel über ein Abdeckelement 13 von der Stromschiene 2a, 2b beabstandet angeordnet. Das Abdeckelement 13 ist in diesem Ausführungsbeispiel aus Metall, bspw. aus Edelstahl hergestellt.

Die einander gegenüberliegend angeordneten freien Enden 31 und 42 sowie 32 und 41 der Laschen 3, 4 sind zueinander versetzt angeordnet, wobei ein freies Ende 31, 41 der Lasche 3, 4 starr an der Stromschiene 2a, 2b fixiert ist.

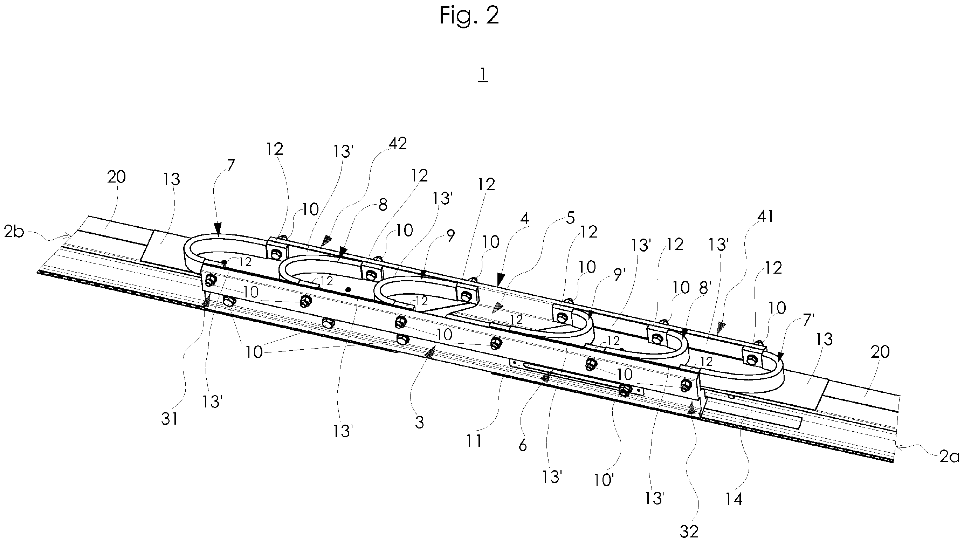

Fig. 2 zeigt eine weitere perspektivische Darstellung des erfindungsgemäßen Dehnverbinders 1. Hier ist der gleiche, erfindungsgemäße Dehnverbinder 1 wie in der Fig. 1 im Detail dargestellt, jedoch in der Ansicht von links.

Der Dehnverbinder 1 umfasst zwei, einander gegenüberliegend über eine Fuge 5 voneinander beabstandet, angeordnete Stromschienen 2a, 2b, zwei Laschen 3, 4, Verbindungselemente 7, 8, 9, 7', 8', 9' sowie Befestigungselemente 10, 10'.

In diesem Ausführungsbeispiel ist am freien Ende 32 der Lasche 3 eine schlitzförmige Öffnung 6 angeordnet, wobei die Stromschiene 2a über das Befestigungselement 10' gleitend mit dem freien Ende 32 der Lasche 3 verbunden ist.

Weiterhin weist die Lasche 3 an der schlitzförmigen Öffnung 6 ein Gleitelement 11 auf. Dieses Gleitelement 11 ist kraftschlüssig mit dem freien Ende 32 der Lasche 3 verbunden und weist ebenfalls eine schlitzförmige Öffnung auf, die in etwa die gleiche Geometrie wie die schlitzförmige Öffnung 6 der Lasche 3 aufweist. Über das Gleitelement 11 ist das Befestigungselement 10' von der Lasche beabstandet, gleitend angeordnet.

Bei bestimmungsgemäßem Einsatz des erfindungsgemäßen Dehnverbinders 1 ist durch den Einsatz des Gleitelementes 11 an der schlitzförmigen Öffnung 6 des freien Endes 32 der Lasche 3 eine noch bessere Bewegung der einander gegenüberliegend angeordneten Stromschienen 2a, 2b möglich.

Weiterhin vorteilhaft bei dem Gleitelement 11 ist, dass ein möglicher Verschleiß am freien Ende 32 der Lasche 3 durch das Befestigungselement 10' hierdurch erfolgreich verhinderbar ist. Das Gleitelement 11 kann dabei sowohl kraftschlüssig über an sich bekannte Schraubverbindungen als auch formschlüssig über korrespondierende Geometrien oder stoffschlüssig über bekannte Kleb- bzw. Schweißverbindungen mit dem freien Ende 32 der Lasche 3 verbunden sein.

Die einander gegenüberliegend angeordneten freien Enden 31 und 42 sowie 32 und 41 der Laschen 3, 4 sind zueinander versetzt angeordnet.

Die der Lasche 3 gegenüberliegend angeordnete Lasche 4 weist ebenfalls an ihrem freien Ende 42 eine hier nicht dargestellte schlitzförmige Öffnung 6 auf, wobei die Stromschiene 2b über das hier nicht sichtbare Befestigungselement 10' gleitend mit dem freien Ende 42 der Lasche 4 verbunden ist, wie bereits in Fig. 1 dargestellt.

Auch das freie Ende 42 der Lasche 4 weist im Bereich der nicht dargestellten schlitzförmigen Öffnung 6 ein derartiges Gleitelement 11 auf.

Die freien Enden 31, 41 der Laschen 3, 4 sind starr an der jeweiligen Stromschiene 2a, 2b fixiert.

Die schlitzförmige Öffnung 6 ist in dem, dem starr fixierten freien Ende 31, 41 gegenüberliegend angeordneten, freien Ende 32, 42 der Lasche 3, 4 angeordnet.

Die Länge der schlitzförmigen Öffnung 6 entspricht in diesem Ausführungsbeispiel etwa der Breite der Fuge 5 zwischen den Stromschienen 2a, 2b.

Die Laschen 3, 4 sind über elektrisch leitfähige Verbindungselemente 7, 8, 9, 7', 8', 9' miteinander verbunden.

Das Verbindungselement 7, 8, 9, 7', 8', 9' ist in diesem Ausführungsbeispiel als flexibles, niederohmiges Band aus einem metallischen Werkstoff mit einem elektrischen Widerstand von etwa 90 µΩ / m ausgebildet.

Das Verbindungselement 7, 8, 9, 7', 8', 9' ist dabei über jeweils ein, an seinem freien Enden angeordnetes, Kontaktelement 12 mit wenigstens einer Lasche 3, 4 elektrisch leitend über wenigstens ein Befestigungselement 10 fixiert.

Das Verbindungselement 7, 8, 9, 7', 8', 9' sowie das Kontaktelement 12 sind in diesem Ausführungsbeispiel aus dem elektrisch leitfähigen Metall Kupfer mit einer elektrischen Leitfähigkeit von wenigstens 58 x 10⁶ S/m hergestellt.

Der Dehnverbinder 1 ist weiterhin so ausgebildet, dass die Verbindungselemente 7, 8, 9, 7', 8', 9' über ein Abdeckelement 13 vom Profilfuß 20 der Stromschiene 2a, 2b beabstandet angeordnet sind. Das Abdeckelement 13 ist in diesem Ausführungsbeispiel aus einem elektrisch nicht leitfähigen Werkstoff wie z.B. einem polymeren Werkstoff hergestellt.

In diesem Ausführungsbeispiel ist das Verbindungselement 7, 8, 9, 7', 8', 9' über ein weiteres Abdeckelement 13' von der Lasche 3, 4 bzw. vom Steg 35, 45 der Lasche 3, 4 beabstandet angeordnet.

Dieses Abdeckelement 13' führt zu einer elektrischen Trennung des Verbindungselements 7, 8, 9, 7', 8', 9' von der Lasche 3, 4 bzw. vom Steg 35, 45 der Lasche 3, 4, da das Abdeckelement 13' aus einem elektrisch nicht leitenden Material wie beispielsweise dem polymeren Werkstoff Polyoxymethylen (POM) herstellt ist.

Der Dehnverbinder 1 ist in diesem Ausführungsbeispiel so dargestellt, dass die Fuge 5 zwischen den Stromschienen 2a, 2b ihre größtmögliche Ausdehnung aufweist, so dass bei bestimmungsgemäßer Verwendung des erfindungsgemäßen Dehnverbinders 1 dieser thermisch bedingte Längenausdehnungen der Stromschienensysteme kompensieren kann, welche der Breite der Fuge 5 bzw. der Länge der schlitzförmigen Öffnung 6 entsprechen. Die Länge der schlitzförmigen Öffnung 6 beträgt in diesem Ausführungsbeispiel etwa 200 mm.

Die Verbindungselemente 7, 8, 9, 7', 8', 9' sind in diesem Ausführungsbeispiel so an der Lasche 3, 4 positioniert, dass deren Abstand zueinander äquidistant ausgebildet ist und bspw. vom Befestigungselement 10 des Verbindungselements 7 zum Befestigungselement 10 des Verbindungselements 8 etwa der Breite der Fuge 5 entspricht. Die Abstände der Verbindungsmittel 7, 8, 9, 7', 8', 9' zueinander entsprechen etwa der Breite der Fuge 5.

Die Verbindungselemente 7, 8, 9, 7', 8', 9' sind in diesem Ausführungsbeispiel im Querschnitt etwa prismatisch ausgebildet und weisen zwischen den an ihren freien Enden angeordneten Kontaktelementen 12 eine Länge von etwa 250 mm auf.

Bei bestimmungsgemäßem Einsatz des erfindungsgemäßen Dehnverbinders 1 für Stromschienensysteme elektrisch betriebener Bahnen können somit thermisch bedingte Längenänderungen des Stromschienensystems ausgeglichen werden, die etwa der Breite der Fuge 5 bzw. der Länge der schlitzförmigen Öffnung 6 entsprechen.

Der erfindungsgemäße Dehnverbinder 1 zeichnet sich dadurch aus, dass die Laschen 3, 4 an den Stromschienen 2a, 2b so befestigt sind, dass ein freies Ende 31, 41 der Lasche 3, 4 starr an der Stromschiene 2a, 2b fixiert ist, während das andere freie Ende 32, 42 der Lasche 3, 4 gleitend über wenigstens ein Befestigungselement 10' mit der Stromschiene 2a, 2b verbunden ist.

Bei nun auftretenden, thermisch bedingten, Längenänderungen im Stromschienensystem bewegen sich die durch die Fuge 5 voneinander beabstandet angeordneten Stromschienen 2a, 2b aufeinander zu und die Übertragung des Stromes von der Stromschiene 2a zur Stromschiene 2b erfolgt über die Verbindungselemente 7, 8, 9, 7', 8', 9' in dem bspw. der elektrische Strom von der Stromschiene 2b in das fixierte freie Ende 31 der Lasche 3 eintritt, über die Verbindungselemente 7, 8, 9, 7', 8', 9' in die gegenüberliegend angeordnete Lasche 4 übertragen wird und vom fixierten freien Ende 41 der Lasche 4 in die Stromschiene 2a fließt.

Der erfindungsgemäße Dehnverbinder 1 zeichnet sich somit dadurch aus, dass die Übertragung des elektrischen Stromes bzw. der elektrische Kontakt jederzeit mit sehr geringen elektrischen Widerstandswerten im Bereich von etwa 8 bis 12 µΩ gegeben ist, unabhängig von korrosionsbedingten Störungen, da der erfindungsgemäße Dehnverbinder 1 gerade keine Flächen aufweist, an denen Korrosion bedingt durch Witterungseinflüsse oder auch durch elektrolytische Reaktionen stattfinden kann.

Es liegt weiterhin im Rahmen der Erfindung, dass das Kontaktelement 12 als Bimetall ausgebildet ist, mit einer dem Verbindungselement 7, 8, 9, 7', 8', 9' gegenüberliegend angeordneten Seite aus Kupfer und einer der Lasche 3, 4 gegenüberliegend angeordneten Seite aus einem anderen Metall bspw. aus Aluminium.

Der erfindungsgemäße Dehnverbinder 1 ist in diesem Ausführungsbeispiel weiterhin so ausgebildet, dass die Lasche 3 über das Distanzelement 14 von der Stromschiene 2a beabstandet angeordnet ist.

Bei einer thermisch bedingten Längenänderung im Stromschienensystem wird nun die Stromschiene 2b über die Laschen 3, 4 so in Längsrichtung zur Stromschiene 2a verschoben, so dass sich die Breite der Fuge 5 reduziert und das freie Ende 32 der Lasche 3 sich über eine definierte Länge der schlitzförmigen Öffnung 6 in Richtung der Stromschiene 2a bewegt. Dabei bewegt sich gelichzeitig die Lasche 3 über das in diesem Ausführungsbeispiel aus einem polymeren Werkstoff hergestellte Distanzelement 14 gleitend hinweg.

In diesem Ausführungsbeispiel des erfindungsgemäßen Dehnverbinders 1 ist auch das starr fixierte Ende 31 der Lasche 3 über ein hier nicht sichtbares Distanzelement von der Stromschiene 2b beabstandet angeordnet.

Weiterhin ist in diesem Ausführungsbeispiel der erfindungsgemäße Dehnverbinder 1 so ausgebildet, dass das freie Ende 42 und das freie Ende 41 der Lasche 4 über ebenfalls, nicht sichtbare, Distanzelemente von der Stromschiene 2a, 2b beabstandet angeordnet ist.

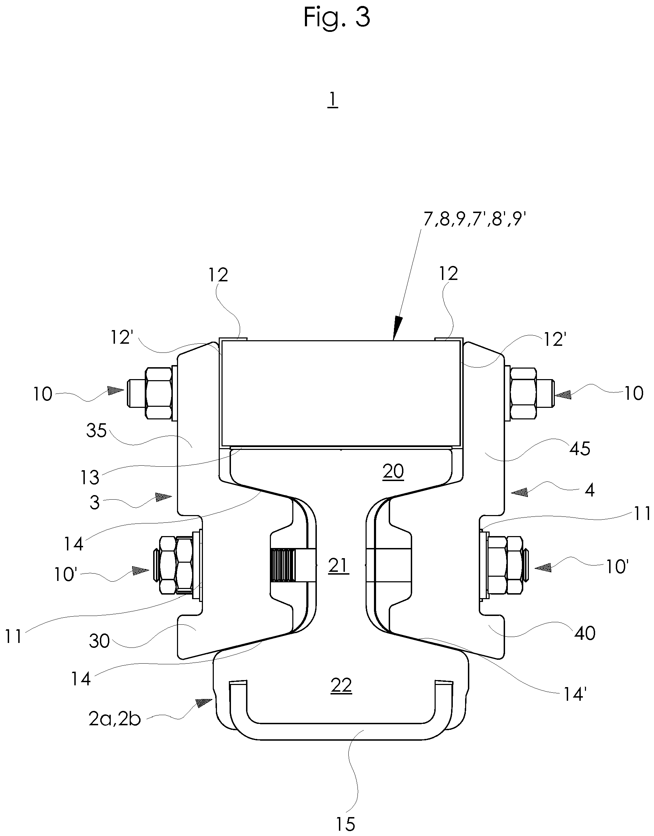

In der Fig. 3 ist eine Vorderansicht eines erfindungsgemäßen Dehnverbinders 1 dargestellt. Der Dehnverbinder 1 umfasst zwei einander gegenüberliegend angeordnete Stromschienen 2a, 2b, zwei Laschen 3, 4, wenigstens ein Verbindungselement 7, 8, 9, 7', 8', 9' sowie Befestigungselemente 10, 10'.

Die Stromschiene 2a, 2b weist in diesem Ausführungsbeispiel einen Profilfuß 20, einen Profilkopf 22 sowie eine diese verbindenden Profilsteg 21 auf. Die Stromschiene 2a, 2b ist weiterhin so ausgebildet, dass am Profilkopf 22 ein Gleitflächenprofil 15 angeordnet ist.

Die einander gegenüberliegend angeordneten Laschen 3, 4 weisen wenigstens eine Basis 30, 40 sowie wenigstens einen davon wegragenden Steg 35, 45 auf.

Dabei ist im Querschnitt gesehen die Gesamtfläche der Laschen 3, 4 größer als die Querschnittsfläche der Stromschiene 2a oder der Stromschiene 2b.

Weiterhin ist im Querschnitt gesehen die Gesamthöhe der Laschen 3, 4 wesentlich größer als der Abstand zwischen dem Profilfuß 20 und dem Profilkopf 22 der Stromschiene 2a, 2b. Hierdurch ist eine sehr hohe Knick- bzw. Biegesteifigkeit des erfindungsgemäßen Dehnverbinders 1 realisierbar.

Der Steg 35, 45 der Lasche 3, 4 überragt den Profilfuß 20 der Stromschiene 2a, 2b.

In dieser Vorderansicht sind die Stromschienen 2a, 2b über das Befestigungselement 10' gleitend mit dem freien Ende 32, 42 der Lasche 3, 4 verbunden.

Das Befestigungselement 10' ist in diesem Ausführungsbeispiel jeweils eine an sich bekannte Schraube, die auf ihrem freien Ende über eine Mutter und bspw. eine zusätzliche Kontermutter fixiert ist. Es liegt jedoch auch im Rahmen der Erfindung, dass das Befestigungselement 10' als selbstsichernde Mutter ausgebildet ist bzw. über an sich bekannte Klebstoffe stoffschlüssig mit der jeweiligen Schraube verbunden ist.

In diesem Ausführungsbeispiel ist der erfindungsgemäße Dehnverbinder 1 so ausgebildet, dass die Stege 35, 45 der Lasche 3, 4 über wenigstens ein, zwischen ihnen angeordnetes, Verbindungselement 7, 8, 9, 7', 8', 9' elektrisch leitend verbunden sind.

Das Verbindungselement 7, 8, 9, 7', 8', 9' ist in diesem Ausführungsbeispiel über ein Kontaktelement 12' mit dem Steg 35, 45 der Lasche 3, 4 über wenigstens ein Befestigungselement 10 fixiert. Das Kontaktelement 12' ist in diesem Ausführungsbeispiel so ausgebildet, dass es über die gesamte Länge am Steg 35, 45 der Lasche 3, 4 angeordnet ist und die Verbindungselemente 7, 8, 9, 7', 8', 9' über das Befestigungselement 10 mit diesem fixiert. In diesem Ausführungsbeispiel ist das Kontaktelement 12' als sogenanntes Bimetall ausgebildet, wobei die dem Steg 35, 45 der Lasche 3, 4 zugewandte Seite aus Aluminium besteht, während die dem Verbindungselement 7, 8, 9, 7', 8', 9' zugewandte Seite des Kontaktelementes 12' aus dem Werkstoff Kupfer besteht.

Das Verbindungselement 7, 8, 9, 7', 8', 9' ist über ein Abdeckelement 13 vom Profilfuß 20 der Stromschiene 2a, 2b beabstandet angeordnet. Das Abdeckelement 13 besteht in diesem Ausführungsbeispiel aus einem Edelstahl gemäß DIN EN 10088.

Die Stromschiene 2a, 2b sowie die Laschen 3, 4 sind in diesem Ausführungsbeispiel aus Aluminium mit einer elektrischen Leitfähigkeit von etwa 33 x 10⁶ S/m hergestellt.

Das Verbindungselement 7, 8, 9, 7', 8', 9' ist in diesem Ausführungsbeispiel im Querschnitt rechteckig ausgebildet, aus Kupfer hergestellt mit einer elektrischen Leitfähigkeit von etwa 58 x 10⁶ S/m.

Weiterhin ist der erfindungsgemäße Dehnverbinder 1 so ausgebildet, dass an der Lasche 3, 4 im Bereich des Befestigungselementes 10' ein Gleitelement 11 angeordnet ist.

Das Gleitelement 11 ist in diesem Ausführungsbeispiel streifenförmig ausgebildet und an der Basis 30, 40 der Lasche 3, 4 über das Befestigungselement 10' mit der Lasche 3, 4 verbunden.

Das Gleitelement 11 ist in diesem Ausführungsbeispiel aus Metall, insbesondere aus einem Edelstahl ausgebildet und so dimensioniert bzw. angeordnet, dass bei bestimmungsgemäßer Verwendung des erfindungsgemäßen Dehnverbinders 1 die Befestigungselemente 10', insbesondere die dargestellten Muttern auf dem Gleitelement 11 bewegbar angeordnet sind.

Durch das an der Basis 30, 40 der Lasche 3,4 angeordnete Gleitelement 11 ist, bei der bestimmungsgemäßen Verwendung des Dehnverbinders 1, ein evtl. entstehender Verschleiß an dieser Stelle erfolgreich verhindert. In diesem Ausführungsbeispiel ist das Gleitelement 11 jeweils kraftschlüssig über eine an sich bekannte Verschraubung mit der jeweiligen Basis 30, 40 der Lasche 3, 4 verbunden.

Der erfindungsgemäße Dehnverbinder 1 ist weiterhin so ausgebildet, dass wenigstens eine Lasche 3, 4 über wenigstens ein Distanzelement 14, 14' vom Profilkopf 22 und vom Profilfuß 20 der Stromschiene 2a, 2b beabstandet angeordnet ist.

In diesem Ausführungsbeispiel ist die Lasche 3 über jeweils zwei Distanzelemente 14 vom Profilkopf 22 und vom Profilfuß 20 der Stromschiene 2a, 2b beabstandet angeordnet.

Die Lasche 4 ist in diesem Ausführungsbeispiel über ein einstückiges Distanzelement 14' vom Profilkopf 22, vom Profilsteg 21 und vom Profilfuß 20 der Stromschiene 2a, 2b beabstandet angeordnet.

Das Distanzelement 14, 14' ist dabei so ausgebildet, dass es bei seinem bestimmungsgemäßen Einsatz an dem freien Ende 31, 41 der Lasche 3, 4, welches starr an der Stromschiene 2a, 2b fixiert ist, aus einem elektrisch leitfähigen, metallischen Werkstoff besteht. Es liegt jedoch auch im Rahmen der Erfindung, dass das Distanzelement 14, 14' so ausgebildet ist, dass es bei bestimmungsgemäßem Einsatz bei dem über das Befestigungselement 10' gleitend angeordneten freien Ende 32, 42 der Lasche 3, 4 aus einem elektrisch nicht leitfähigen bzw. isolierenden Werkstoff hergestellt ist, wie beispielsweise einem polymeren Werkstoff, wie Polyoxymethylen (POM), Polytetrafluorethylen (PTFE) und dergleichen.

Das so ausgebildete Distanzelement 14, 14' sorgt bei dem beweglichen Ende 32, 42 der Lasche 3, 4 einerseits für eine gute gleitende Bewegung und andererseits zu einer elektrischen Trennung bzw. Isolierung, so dass das bei den, aus dem Stand der Technik bekannten Dehnverbindern, resultierende Verschweißen der Laschen 3, 4 mit den Stromschienen 2a, 2b ausgeschlossen ist.

In diesem Ausführungsbeispiel ist die Basis 30, 40 der Lasche 3, 4 im Querschnitt etwa doppel-T-förmig ausgebildet, wobei der Steg 35, 45 einstückig mit der Basis 30, 40 der Lasche 3, 4 verbunden ist.

Es liegt jedoch auch im Rahmen der Erfindung, dass der Steg 35, 45 kraftschlüssig und / oder formschlüssig mit der Basis 30, 40 der Lasche 3, 4 verbunden ist.

Der erfindungsgemäße Dehnverbinder 1 ist so ausgebildet, dass das Verbindungselement 7, 8, 9, 7', 8', 9' an der dem Profilfuß 20 der Stromschiene 2a, 2b gegenüberliegend angeordneten Innenseite des Steges 35, 45 der Lasche 3, 4 fixiert ist. Es liegt jedoch auch im Rahmen der Erfindung, dass der erfindungsgemäße Dehnverbinder 1 so ausgebildet ist, dass das Verbindungselement 7, 8, 9, 7', 8', 9' an der dem Profilfuß 20 der Stromschiene 2a, 2b gegenüberliegend angeordneten Außenseite des Steges 35, 45 der Lasche 3, 4 fixiert ist.

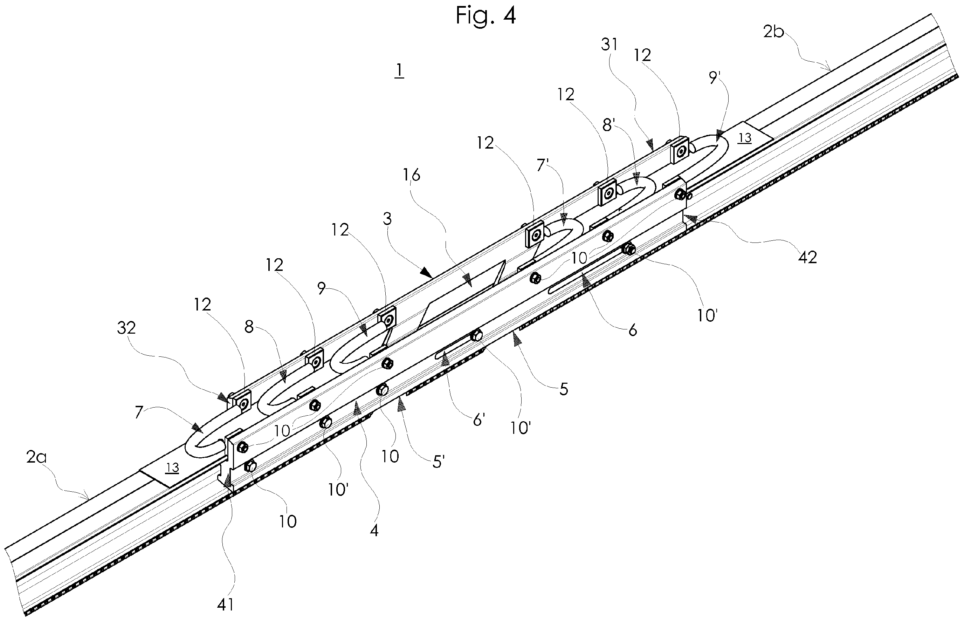

In der Fig. 4 ist eine perspektivische Darstellung eines weiteren erfindungsgemäßen Dehnverbinders 1 dargestellt.

Der Dehnverbinder 1 ist in diesem Ausführungsbeispiel so ausgebildet, dass er zwei einander gegenüberliegend über eine Fuge 5 und eine Fuge 5' voneinander beabstandet angeordnete Stromschienen 2a, 2b, zwei Laschen 3, 4, wenigstens ein Verbindungselement 7, 8, 9, 7', 8', 9' sowie Befestigungselemente 10, 10' aufweist.

Der erfindungsgemäße Dehnverbinder 1 ist weiterhin so ausgebildet, dass zwischen den einander gegenüberliegend angeordneten Stromschienen 2a, 2b wenigstens ein Stromschienenelement 16 über die Fugen 5, 5' beabstandet angeordnet ist.

Die Laschen 3, 4 weisen an ihrem freien Ende 32, 42 jeweils eine schlitzförmige Öffnung 6 auf, wobei die Stromschiene 2a, 2b über ein Befestigungselement 10' gleitend mit dem freien Ende 32, 42 der Lasche 3, 4 verbunden ist und wobei die Laschen 3, 4 über wenigstens ein, elektrisch leitfähiges, Verbindungselement 7, 8, 9, 7', 8', 9' miteinander verbunden sind.

Die einander gegenüberliegend angeordneten freien Enden 32 und 41 sowie 31, 42 der Laschen 3, 4 sind zueinander versetzt angeordnet, wobei ein freies Ende 31, 41 der Lasche 3, 4 starr an einer Stromschiene 2a, 2b fixiert ist.

Der Dehnverbinder 1 ist in diesem Ausführungsbeispiel weiterhin so ausgebildet, dass die schlitzförmige Öffnung 6 in dem, dem starr fixierten freien Ende 31, 41 gegenüberliegend angeordneten freien Ende 32, 42 der Lasche 3, 4 angeordnet ist.

Die Länge der schlitzförmigen Öffnung 6 entspricht in diesem Ausführungsbeispiel etwa der Summe der Breiten der Fugen 5 und der Fuge 5'.

Die Laschen 3, 4 sind in diesem Ausführungsbeispiel weiterhin so ausgebildet, dass sie zwischen ihren freien Enden 31 und 32, sowie 41 und 42 jeweils eine weitere schlitzförmige Öffnung 6' aufweisen. Die Länge der schlitzförmigen Öffnung 6' entspricht in diesem Ausführungsbeispiel etwa der Breite der Fuge 5 oder der Fuge 5'.

Das Stromschienenelement 16 ist zwischen den gegenüberliegenden Enden der Stromschiene 2a, 2b beabstandet durch eine Fuge 5, 5' über wenigsten ein, an der Lasche 3, 4 angeordnetes, Befestigungselement 10' gleitend angeordnet.

Die Laschen 3, 4 des erfindungsgemäßen Dehnverbinders 1 sind analog zu den bereits in den Figuren 1 bis 3 beschriebenen ausgebildet und weisen ebenfalls eine Basis 30, 40 sowie davon wegragende Stege 35, 45 auf.

Die einander gegenüberliegend angeordneten Laschen 3, 4 sind über wenigstens ein, elektrisch leitfähiges, Verbindungselement 7, 8, 9, 7', 8', 9' miteinander verbunden, wobei die Verbindungselemente 7, 8, 9, 7', 8', 9' in diesem Ausführungsbeispiel im Querschnitt etwa rund ausgebildet sind und über Kontaktelemente 12 mit dem jeweiligen Steg 35, 45 der Lasche 3, 4 elektrisch leitend über Befestigungselemente 10 fixiert sind.

Die Verbindungselemente 7, 8, 9, 7', 8', 9' sind über ein Abdeckelement 13, 13' von der Stromschiene 2a, 2b beabstandet angeordnet, wobei das Abdeckelement 13, 13' in diesem Ausführungsbeispiel aus Keramik hergestellt ist.

Der erfindungsgemäße Dehnverbinder 1 ist in diesem Ausführungsbeispiel so dargestellt, dass die maximale Breite der Fuge 5, 5' zwischen den Stromschienen 2a, 2b erreicht ist.

Bei bestimmungsgemäßer Verwendung des erfindungsgemäßen Dehnverbinders 1 können sich die einander gegenüberliegend angeordneten Stromschienen 2a, 2b bei einer thermisch bedingten Längenänderung des Stromschienensystems über die Befestigungselemente 10' gleitend aufeinander zubewegen, sodass die Breite der Fuge 5, 5' sich auf nahezu 1 mm reduziert.

Durch die vorteilhafte Ausgestaltung des erfindungsgemäßen Dehnverbinders 1 ist es möglich, die bei bestimmungsgemäßer Verwendung des Dehnverbinders 1 erforderliche Breite der Fuge 5 auf zwei in ihrer Breite kleinere und über wenigstens ein Stromschienenelement 16 beabstandete Fugen 5, 5' zu optimieren.

Der erfindungsgemäße Dehnverbinder 1 in diesem Ausführungsbeispiel ist somit in der Lage, thermisch bedingte Längenänderungen der Stromschienensysteme in der gleichen Dimension zu kompensieren, wie ein ebenfalls erfindungsgemäßer Dehnverbinder 1, bei dem in der Fuge 5 kein Stromschienenelement 16 angeordnet ist.

In diesem Ausführungsbeispiel ist der erfindungsgemäße Dehnverbinder 1 weiterhin so ausgebildet, dass die Länge der schlitzförmigen Öffnung 6 am freien Ende 32, 42 der Lasche 3, 4 etwa 200 mm beträgt, während die zwischen den freien Enden 31, 32 sowie 41, 42 der Lasche 3, 4 angeordnete schlitzförmige Öffnung 6' eine Länge von etwa 100 mm aufweist.

## Patentansprüche

1. Dehnverbinder (1) für Stromschienensysteme elektrisch betriebener Bahnen, insbesondere S-Bahnen, U-Bahnen und dergleichen, umfassend wenigstens zwei, einander in ihrer Längsachse fluchtend, gegenüberliegend über wenigstens eine Fuge (5, 5') voneinander beabstandet, angeordnete Stromschienen (2a, 2b), wobei die Stromschienen (2a, 2b) einen Profilfuß (20), einen Profilkopf (22) sowie einen diese verbindenden Profilsteg (21) aufweisen, wenigstens zwei, an den sich zwischen Profilfuß (20) und Profilkopf (22) gegenüberliegenden Außenseiten der Stromschienen (2a, 2b) angeordneten, elektrisch leitfähige Laschen (3, 4), wobei die Laschen (3, 4) wenigstens eine Basis (30, 40) sowie wenigstens eine davon wegragenden Steg (35 45) aufweisen, wenigstens ein Verbindungselement (7, 8, 9, 7', 8', 9'), sowie Befestigungselemente (10, 10'), wobei jede der Laschen (3, 4) an wenigstens einem freien Ende (32, 42) wenigstens eine schlitzförmige Öffnung (6) aufweist, wobei die Stromschiene (2a, 2b) über wenigstens ein Befestigungselement (10') gleitend mit diesem freien Ende (32, 42) der jeweiligen Lasche (3, 4) verbunden ist und wobei die Laschen (3, 4) über das wenigstens eine, elektrisch leitfähige, Verbindungselement (7, 8, 9, 7', 8', 9') miteinander verbunden sind, wobei jeweils ein freies Ende (31, 41) der Lasche (3, 4) mit einem Ende der Stromschiene (2a, 2b) starr fixiert ist, während das andere, dem starr fixierten freien Ende der jeweils anderen Lasche (3, 4) gegenüberliegend angeordnete, freie Ende (32, 42) der Lasche (3, 4) mit dem Ende der anderen Stromschiene (2a, 2b) gleitend verbunden ist, wobei der Steg (35, 45) der Lasche (3, 4) den Profilfuß (20) der Stromschiene (2a, 2b) wenigstens teilweise überragt, und wobei die Stege (35, 45) der Lasche (3, 4) über das wenigstens eine zwischen ihnen angeordnete Verbindungselement (7, 8, 9, 7', 8', 9') elektrisch leitend verbunden sind.

2. Dehnverbinder (1) nach Anspruch 1, **dadurch gekennzeichnet, dass** die einander gegenüberliegend angeordneten Laschen (3, 4) in Längsrichtung der Stromschienen (2a, 2b) zueinander versetzt angeordnet sind.

3. Dehnverbinder (1) nach einem der vorhergehenden Ansprüche, **dadurch gekennzeichnet, dass** die Länge der schlitzförmigen Öffnung (6) etwa der Breite der Fuge (5, 5') zwischen den Stromschienen (2a, 2b) entspricht.

4. Dehnverbinder (1) nach einem der vorhergehenden Ansprüche, **dadurch gekennzeichnet, dass** das Verbindungselement (7, 8, 9, 7', 8', 9') als flexibles, niederohmiges Band aus einem metallischen Material, mit einem elektrischen Widerstand von maximal 100 µ Ω/m, gebildet ist.

5. Dehnverbinder (1) nach einem der vorhergehenden Ansprüche, **dadurch gekennzeichnet, dass** das Verbindungselement (7, 8, 9, 7', 8', 9') über wenigstens ein an seinen freien Enden angeordnetes Kontaktelement (12) mit wenigstens einem Steg (35, 45) der Lasche (3, 4) verbunden ist.

6. Dehnverbinder (1) nach einem der vorhergehenden Ansprüche, **dadurch gekennzeichnet, dass** das Verbindungselement (7, 8, 9, 7', 8', 9') über wenigstens ein Abdeckelement (13, 13') von der Stromschiene (2a, 2b) und/oder der Lasche (3, 4) beabstandet angeordnet ist.

7. Dehnverbinder (1) nach Anspruch 6, **dadurch gekennzeichnet, dass** das Abdeckelement (13, 13') aus einem elektrisch leitfähigen Werkstoff wie bspw. Stahl, Edelstahl ausgebildet ist.

8. Dehnverbinder (1) nach Anspruch 6, **dadurch gekennzeichnet, dass** das Abdeckelement (13, 13') wenigstens teilweise aus einem nicht elektrisch leitfähigen Material wie bspw. polymere, duromere bzw. keramische Werkstoffe hergestellt ist.

9. Dehnverbinder (1) nach einem der vorhergehenden Ansprüche, **dadurch gekennzeichnet, dass** wenigstens eine Lasche (3, 4) über wenigstens ein Distanzelement (14, 14') von der Stromschiene (2a, 2b) beabstandet angeordnet ist.

10. Dehnverbinder (1) nach einem der vorhergehenden Ansprüche, **dadurch gekennzeichnet, dass** der Abstand der an den Laschen (3, 4) angeordneten Verbindungselemente (7, 8, 9, 7', 8', 9') etwa der Länge der schlitzförmigen Öffnung (6) entspricht.

11. Dehnverbinder (1) nach einem der vorhergehenden Ansprüche, **dadurch gekennzeichnet, dass** die schlitzförmige Öffnung (6, 6') der Lasche (3, 4) eine Länge von etwa 50 bis 400 mm, bevorzugt 75 bis 300 mm, besonders bevorzugt 100 bis 200 mm aufweist.

12. Dehnverbinder (1) nach einem der vorhergehenden Ansprüche, **dadurch gekennzeichnet, dass** wenigstens eine Lasche (3, 4) im Bereich der schlitzförmigen Öffnung (6, 6') wenigstens ein Gleitelement (11) aufweist.

13. Stromschienensystem elektrisch betriebener Bahnen, insbesondere S-Bahnen, U-Bahnen und dgl., mit einem Dehnverbinder (1) gemäß den Ansprüchen 1 bis 12.

## Claims

1. Expansion joint (1) for conductor rail systems of electrically operated railways, in particular suburban railways, underground railways and the like, comprising at least two conductor rails (2a, 2b) which are in alignment with one another in their longitudinal axis and are arranged opposite one another and spaced apart by at least one gap (5, 5'), wherein the conductor rails (2a, 2b) have a profile foot (20), a profile head (22) and a profile web (21) connecting them, at least two electrically conductive fishplates (3, 4) arranged on the outer sides of the conductor rails (2a, 2b) lying opposite one another between the profile foot (20) and the profile head (22), wherein the fishplates (3, 4) have at least one base (30, 40) and at least one web (35, 45) projecting away from the base, at least one connecting element (7, 8, 9, 7', 8', 9'), as well as fixing elements (10, 10'), wherein each of the fishplates (3, 4) has at least one slot-shaped opening (6) at at least one free end (32, 42), wherein the conductor rail (2a, 2b) is connected in a sliding manner to that free end (32, 42) of the respective fishplate (3, 4) *via* at least one fixing element (10') and wherein the fishplates (3, 4) are connected to one another *via* the at least one electrically conductive connecting element (7, 8, 9, 7', 8', 9'), wherein in each case a free end (31, 41) of the fishplate (3, 4) is rigidly fixed to an end of the conductor rail (2a, 2b), while the other free end (32, 42), arranged opposite the rigidly fixed free end of the respective other fishplate (3, 4), of the fishplate (3, 4) is connected in a sliding manner to the end of the other conductor rail (2a, 2b), wherein the web (35, 45) of the fishplate (3, 4) protrudes at least in part above the profile foot (20) of the conductor rail (2a, 2b), and wherein the webs (35, 45) of the fishplate (3, 4) are connected in an electrically conducting manner *via* the at least one connecting element (7, 8, 9, 7', 8', 9') arranged between them.

2. Expansion joint (1) according to claim 1, **characterised in that** the fishplates (3, 4) arranged opposite one another are arranged offset relative to one another in the longitudinal direction of the conductor rails (2a, 2b).

3. Expansion joint (1) according to any one of the preceding claims, **characterised in that** the length of the slot-shaped opening (6) corresponds approximately to the width of the gap (5, 5') between the conductor rails (2a, 2b).

4. Expansion joint (1) according to any one of the preceding claims, **characterised in that** the connecting element (7, 8, 9, 7', 8', 9') is in the form of a flexible, low-ohm strip of a metallic material, with an electric resistance of not more than 100 µΩ/m.

5. Expansion joint (1) according to any one of the preceding claims, **characterised in that** the connecting element (7, 8, 9, 7', 8', 9') is connected *via* at least one contact element (12) arranged at its free ends to at least one web (35, 45) of the fishplate (3, 4).

6. Expansion joint (1) according to any one of the preceding claims, **characterised in that** the connecting element (7, 8, 9, 7', 8', 9') is arranged spaced apart from the conductor rail (2a, 2b) and/or the fishplate (3, 4) by at least one cover element (13, 13').

7. Expansion joint (1) according to claim 6, **characterised in that** the cover element (13, 13') is made of an electrically conductive material such as, for example, steel, stainless steel.

8. Expansion joint (1) according to claim 6, **characterised in that** the cover element (13, 13') is made at least in part of a non-electrically-conductive material such as, for example, polymeric, thermoset or ceramics materials.

9. Expansion joint (1) according to any one of the preceding claims, **characterised in that** at least one fishplate (3, 4) is arranged spaced apart from the conductor rail (2a, 2b) *via* at least one spacer element (14, 14').

10. Expansion joint (1) according to any one of the preceding claims, **characterised in that** the spacing of the connecting elements (7, 8, 9, 7', 8', 9') arranged on the fishplates (3, 4) corresponds approximately to the length of the slot-shaped opening (6).

11. Expansion joint (1) according to any one of the preceding claims, **characterised in that** the slot-shaped opening (6, 6') of the fishplate (3, 4) has a length of approximately from 50 to 400 mm, preferably from 75 to 300 mm, particularly preferably from 100 to 200 mm.

12. Expansion joint (1) according to any one of the preceding claims, **characterised in that** at least one fishplate (3, 4) has at least one sliding element (11) in the region of the slot-shaped opening (6, 6').

13. Conductor rail system of electrically operated railways, in particular suburban railways, underground railways and the like, having an expansion joint (1) according to claims 1 to 12.

## Revendications

1. Connecteur extensible (1) pour systèmes de rails conducteurs de réseaux exploités de manière électrique, en particulier les réseaux express régionaux, les métros et similaires, comprenant au moins deux rails conducteurs (2a, 2b) disposés de manière opposée espacés par au moins un joint (5, 5') et en alignement l'un avec l'autre dans leur axe longitudinal, les rails conducteurs (2a, 2b) comportant un pied de profilé (20), une tête de profilé (22) ainsi qu'une âme de profilé (21) reliant ceux-ci, au moins deux éclisses (3, 4) électriquement conductrices disposées sur les côtés extérieurs des rails conducteurs (2a, 2b) opposés l'un à l'autre entre le pied de profilé (20) et la tête de profilé (22), les éclisses (3, 4) comportant au moins une base (30, 40) ainsi qu'au moins une aile (35, 45) dépassant de celle-ci, au moins un élément de liaison (7, 8, 9, 7', 8', 9'), ainsi que des éléments de fixation (10, 10'), chacune des éclisses (3, 4) comportant sur au moins une extrémité libre (32, 42) au moins une ouverture (6) en forme de fente, le rail conducteur (2a, 2b) étant relié à cette extrémité libre (32, 42) de l'éclisse (3, 4) respective de manière coulissante par le biais d'au moins un élément de fixation (10') et les éclisses (3, 4) étant reliées l'une à l'autre par le biais de l'au moins un élément de liaison (7, 8, 9, 7', 8', 9') électriquement conducteur, respectivement une extrémité libre (31, 41) de l'éclisse (3, 4) étant fixée de manière rigide à une extrémité du rail conducteur (2a, 2b), pendant que l'autre extrémité libre (32, 42) de l'éclisse (3, 4) disposée opposée à l'extrémité libre fixée de manière rigide de l'autre éclisse (3, 4) respective, est reliée de manière coulissante à l'extrémité de l'autre rail conducteur (2a, 2b), l'aile (35, 45) de l'éclisse (3, 4) dépassant au moins en partie du pied de profilé (20) du rail conducteur (2a, 2b), et les ailes (35, 45) de l'éclisse (3, 4) étant reliées de manière électriquement conductrice par l'au moins un élément de liaison (7, 8, 9, 7', 8', 9') disposé entre elles.

2. Connecteur extensible (1) selon la revendication 1, **caractérisé en ce que** les éclisses (3, 4) disposées opposées l'une à l'autre sont disposées de manière décalée l'une par rapport à l'autre dans la direction longitudinale des rails conducteurs (2a, 2b).

3. Connecteur extensible (1) selon l'une des revendications précédentes, **caractérisé en ce que** la longueur de l'ouverture (6) en forme de fente correspond approximativement à la largeur du joint (5, 5') entre les rails conducteurs (2a, 2b).

4. Connecteur extensible (1) selon l'une des revendications précédentes, **caractérisé en ce que** l'élément de liaison (7, 8, 9, 7', 8', 9') se présente sous la forme d'une bande flexible à faible résistance en matériau métallique, avec une résistance électrique de 100 µΩ/m maximum.

5. Connecteur extensible (1) selon l'une des revendications précédentes, **caractérisé en ce que** l'élément de liaison (7, 8, 9, 7', 8', 9') est relié à au moins une aile (35, 45) de l'éclisse (3, 4) par le biais d'au moins un élément de contact (12) disposé sur ses extrémités libres.

6. Connecteur extensible (1) selon l'une des revendications précédentes, **caractérisé en ce que** l'élément de liaison (7, 8, 9, 7', 8', 9') est disposé espacé du rail conducteur (2a, 2b) et/ou de l'éclisse (3, 4) par le biais d'au moins un élément de recouvrement (13, 13').

7. Connecteur extensible (1) selon la revendication 6, **caractérisé en ce que** l'élément de recouvrement (13, 13') est réalisé en une matière électriquement conductrice telle que de l'acier, de l'acier inoxydable.

8. Connecteur extensible (1) selon la revendication 6, **caractérisé en ce que** l'élément de recouvrement (13, 13') est fabriqué au moins en partie en un matériau non électriquement conducteur tel que des matières polymères, duromères ou céramiques.

9. Connecteur extensible (1) selon l'une des revendications précédentes, **caractérisé en ce qu'**au moins une éclisse (3, 4) est disposée espacée du rail conducteur (2a, 2b) par le biais d'au moins un élément d'écartement (14, 14').

10. Connecteur extensible (1) selon l'une des revendications précédentes, **caractérisé en ce que** la distance entre les éléments de liaison (7, 8, 9, 7', 8', 9') disposés sur les éclisses (3, 4) correspond approximativement à la longueur de l'ouverture (6) en forme de fente.

11. Connecteur extensible (1) selon l'une des revendications précédentes, **caractérisé en ce que** l'ouverture (6, 6') en forme de fente de l'éclisse (3, 4) présente une longueur d'environ 50 à 400 mm, de préférence de 75 à 300 mm, de manière particulièrement préférée de 100 à 200 mm.

12. Connecteur extensible (1) selon l'une des revendications précédentes, **caractérisé en ce qu'**au moins une éclisse (3, 4) présente au moins un élément coulissant (11) dans la zone de l'ouverture (6, 6') en forme de fente.

13. Système de rails conducteurs de réseaux exploités de manière électrique, en particulier de réseaux express régionaux, métros et similaires, comprenant un connecteur extensible (1) selon les revendications 1 à 12.
